# DEMANDE DE BREVET EUROPEEN

(11) **EP 2 100 782 A2**
(43) Date de publication de la demande: **16.09.2009**
(21) Numéro de dépôt: 09153887.6
(22) Date de dépôt: 27.02.2009
(51) Int. Cl.: B60R 22/19

(54) **Passant à face inclinée pour une ceinture de sécurité**

(30) Priorité: 14.03.2008 FR 0851653
(71) Demandeur: Peugeot Citroën Automobiles SA, 78140 Vélizy-Villacoublay (FR)
(72) Inventeur: Oudart, Fabrice, 25700, VALENTIGNEY (FR)
(74) Mandataire: Vigand, Régis Louis Michel

(57) **Abrégé**

Un passant (PC) est destiné à limiter le coulissement d'un pêne extractible (PE) par rapport à une sangle (SC) de ceinture de sécurité. Ce passant (PC) comprend un corps muni d'un orifice interne (OI) débouchant sur des faces dites supérieure (FS) et inférieure (FI) opposées et dans lequel peut coulisser la sangle (SC). La face supérieure (FS) du corps du passant (PC) est inclinée d'un angle obtus choisi par rapport à la face avant (FA) de la sangle (SC), orientée vers l'extrémité libre (AP) du pêne extractible (PE), afin de contraindre une portion (PP) du pêne extractible (PE), dans laquelle coulisse la sangle (SC), à être inclinée sensiblement de l'angle obtus par rapport à la face avant (FA) lorsqu'elle est au contact de la face supérieure (FS) du passant (PC).

## Description

L'invention concerne les ceintures de sécurité qui équipent certains sièges, par exemple de véhicules automobiles, et plus précisément le positionnement des pênes extractibles de telles ceintures de sécurité par rapport à leurs sangles.

Comme le sait l'homme de l'art, certaines ceintures de sécurité, qui équipent certains sièges, notamment de véhicules automobiles, comprennent un pêne extractible dans lequel coulisse une sangle et destiné à être introduit par un passager dans une boucle comportant un mécanisme de verrouillage amovible afin de le maintenir temporairement attaché sur son siège.

Certaines sangles sont parfois munies de ce que l'homme de l'art appelle généralement un passant (ou barrette coulissante) qui, lorsqu'il est placé contre le pêne extractible, est destiné à limiter son coulissement par rapport à la sangle. Ce passant peut parfois coulisser par rapport à la sangle afin, notamment, de permettre l'immobilisation du pêne extractible dans une zone où il n'est pas en contact avec un autre élément ou équipement, évitant ainsi qu'il génère du bruit et/ou qu'il endommage un élément et/ou qu'il gêne l'accès à une commande du siège. De tels passants sont notamment décrits dans les documents brevet EP 437138, US 4,223,917 et EP 1253052.

On notera que le pêne extractible peut être soit sensiblement plat, soit courbé.

Afin, notamment, de faciliter la préhension du pêne extractible dans certaines implantations, comme par exemple sur les sièges latéraux qui sont situés dans la deuxième rangée de sièges d'un véhicule automobile qui en comporte au moins trois, il a été proposé d'utiliser un passant de forme générale sensiblement parallélépipédique. Dans ce cas, le passant comprend un corps qui est muni d'un orifice interne qui débouche sur des faces dites supérieure et inférieure opposées, sensiblement parallèles entre elles et sensiblement perpendiculaires à la sangle, et dans lequel peut coulisser la sangle. On comprendra que lorsque le pêne est en position d'attente (non utilisé) et au contact de la face supérieure du passant, il se retrouve placé sensiblement à 90° de la sangle, facilitant ainsi sa préhension par un passager. Avec ce type de passant, il est généralement préférable d'utiliser un pêne de type plat du fait qu'un pêne de type courbé entraîne non seulement un déplacement de la boucle de ceinture vers le siège voisin ce qui peut gêner son occupant, mais également exerce une pression désagréable sur la cuisse de l'occupant du siège qu'il équipe.

Cependant, il a été constaté que le passant, en raison de son volume, pouvait, lorsque le pêne était immobilisé dans la boucle, constituer une gêne au niveau la cuisse de l'occupant du siège que sa ceinture de sécurité équipe. En outre, il a été constaté que le pêne entrait plus facilement en contact avec des passagers ou des équipements du véhicule lorsqu'il était sensiblement perpendiculaire à la sangle, ce qui pouvait par exemple endommager un revêtement (notamment de siège).

L'invention a donc pour but d'améliorer la situation.

Elle propose à cet effet un passant (ou barrette coulissante), destiné à limiter le coulissement d'un pêne extractible par rapport à une sangle de ceinture de sécurité, et comprenant un corps muni d'un orifice interne débouchant sur des faces dites supérieure et inférieure opposées et dans lequel peut coulisser la sangle. La face supérieure du corps du passant est inclinée d'un angle obtus choisi par rapport à la face avant de la sangle (qui est orientée vers l'extrémité libre (ou âme) du pêne extractible) afin de contraindre une portion du pêne extractible, dans laquelle coulisse la sangle, à être inclinée sensiblement de cet angle obtus par rapport à la face avant lorsqu'elle est au contact de la face supérieure du passant.

Elle propose également à cet effet un passant (ou barrette coulissante), destiné à limiter le coulissement d'un pêne extractible par rapport à une sangle de ceinture de sécurité, et comprenant un corps muni d'un orifice interne débouchant sur des faces dites supérieure et inférieure opposées et dans lequel peut coulisser la sangle. La face supérieure du corps du passant est inclinée d'un angle obtus choisi par rapport à la direction de coulissement de la sangle dans le passant afin de contraindre une portion du pêne extractible, dans laquelle coulisse la sangle, à être inclinée sensiblement de cet angle obtus par rapport à la face avant lorsqu'elle est au contact de la face supérieure du passant. La direction de coulissement de la sangle dans le passant correspond à la direction parallèle aux faces internes de l'orifice interne. La direction de coulissement est la direction de coulissement de la sangle tendue, une sangle non tendue ne présentant pas une direction uniforme. L'orifice interne du passant étant de préférence serré autour de la sangle, celle-ci est alors forcément tendue au niveau de l'orifice interne dans lequel elle coulisse. La face avant extérieure du passant, celle située du côté du pêne extractible, est de préférence inclinée du même angle obtus par rapport à la face supérieure du passant.

L'invention concerne également un ensemble comprenant une sangle de ceinture de sécurité, un pêne extractible et un passant pour limiter le coulissement du pêne extractible par rapport à la sangle de ceinture de sécurité, le passant étant conforme aux définitions précédentes.

Le passant selon l'invention peut comporter d'autres caractéristiques qui peuvent être prises séparément ou en combinaison, et notamment :
- l'angle obtus de la face supérieure du corps du passant peut être choisi dans un intervalle s'étendant entre environ 110°et environ 150°;
   ➢ l'angle obtus de la face supérieure du corps du passant peut par exemple être choisi égal à environ 135° ;
- la face inférieure du corps du passant peut être inclinée d'un angle aigu choisi par rapport à la face avant de la sangle ;
- l'angle aigu de la face inférieure du corps du passant peut être choisi dans un intervalle s'étendant entre environ 20° et environ 60°;
   ➢ l'angle aigu de la face inférieure du corps du passant peut par exemple être choisi égal à environ 45°.

L'invention propose également une ceinture de sécurité comprenant une sangle coulissant dans une portion d'un pêne et un passant du type de celui présenté ci-avant et dans lequel coulisse la sangle.

Le pêne de cette ceinture de sécurité peut être du type dit « plat ».

L'invention est particulièrement bien adaptée aux ceintures de sécurité destinées à équiper des sièges de véhicule automobile.

D'autres caractéristiques et avantages de l'invention apparaîtront à l'examen de la description détaillée ci-après, et des dessins annexés, sur lesquels :
- la figure 1 illustre de façon schématique une ceinture de sécurité équipée d'un passant selon l'invention,
- la figure 2 illustre de façon schématique une partie d'un passager installé sur un siège équipé d'une ceinture de sécurité selon l'invention dont le pêne extractible est immobilisé par rapport à une boucle fixe,
- la figure 3 illustre de façon schématique, dans une vue en perspective, un exemple de réalisation d'un passant selon l'invention, dans lequel coulisse une sangle de ceinture de sécurité, et
- la figure 4 illustre de façon schématique, dans une vue de côté, le passant de la figure 3, sur la face supérieure duquel s'appuie un pêne de ceinture de sécurité solidarisé à la sangle.

Les dessins annexés pourront non seulement servir à compléter l'invention, mais aussi contribuer à sa définition, le cas échéant.

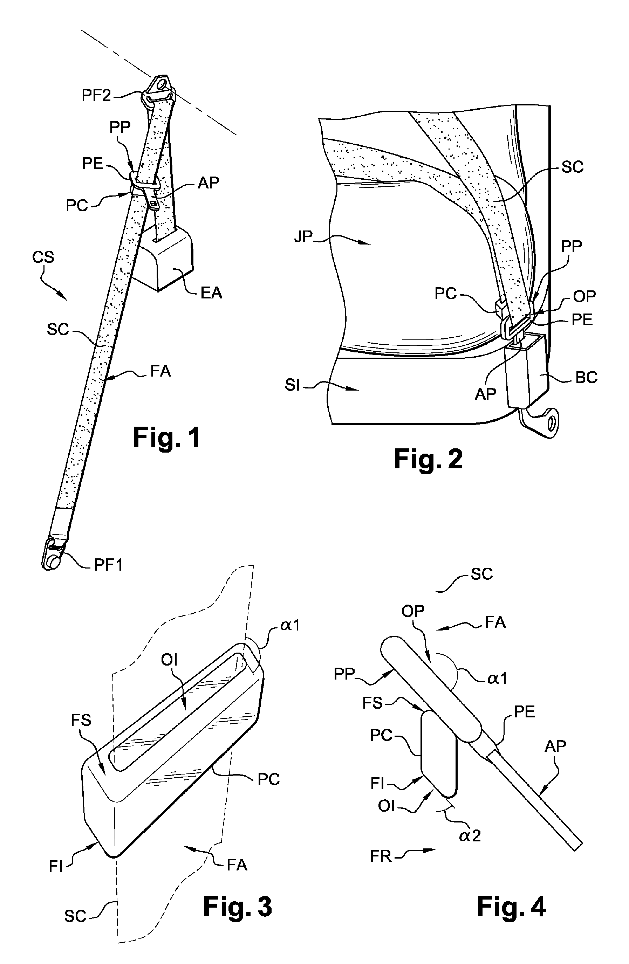

On a schématiquement représenté sur la figure 1 un exemple de ceinture de sécurité CS destinée à équiper un siège (ou une partie de banquette), par exemple d'un véhicule automobile. Le siège peut par exemple être un siège latéral (éventuellement rabattable) de la deuxième rangée de sièges d'un véhicule automobile qui en comporte au moins trois.

La ceinture de sécurité CS comprend tout d'abord une sangle SC comprenant des première et seconde extrémités opposées.

Elle comprend également un enrouleur automatique EA destiné à être fixé à la structure (ou caisse) du véhicule et auquel est solidarisée la première extrémité de la sangle SC.

La ceinture de sécurité CS comprend également un premier élément de fixation PF1 destiné à être fixé à la structure (ou caisse) du véhicule, dans une partie inférieure, et auquel est solidarisée la seconde extrémité de la sangle SC.

La ceinture de sécurité CS comprend également un second élément de fixation PF2 destiné à être fixé à la structure (ou caisse) du véhicule, dans une partie supérieure, et assurant le renvoi et le coulissement de la sangle SC.

La ceinture de sécurité CS comprend également un pêne extractible PE comportant, d'une part, une partie (ou portion) PP munie d'au moins une ouverture OP dans laquelle peut coulisser la sangle SC, et d'autre part, une extrémité libre AP (appelée âme) prolongeant la partie PP et destinée à être introduite par un passager dans une boucle BC (voir figure 2), elle-même destinée à être fixée à la structure du véhicule ou bien au siège SI et comportant un mécanisme de verrouillage amovible.

L'âme (ou extrémité libre) AP est par exemple en métal et de forme aplatie (comme une lame). La partie (ou portion) PP peut être revêtue d'un matériau synthétique ou bien d'un carter constitué de deux demi-coques en matière plastique (ou analogue). Comme illustré sur les figures 1, 2 et 4, le pêne extractible PE est préférentiellement de type plat (c'est-à-dire non courbé - l'âme AP est située sensiblement dans le même plan que la partie PP comportant l'ouverture OP).

Enfin, la ceinture de sécurité CS comprend un passant (ou barrette coulissante) PC (voir figures 2 et 3) qui comprend un corps muni d'un orifice interne OI qui débouche sur des faces dites supérieure FS et inférieure FI opposées l'une à l'autre et à l'intérieur duquel peut coulisser la sangle SC.

Ce passant PC peut être soit monobloc, soit constitué de deux demi-coques en matière plastique (ou analogue).

Selon l'invention, et comme cela est mieux illustré sur les figures 2 et 3, la face supérieure FS du corps du passant PC est inclinée d'un (ou biseautée suivant un) angle obtus α1 choisi par rapport à la face avant FA de la sangle SC.

On entend ici par « face avant » la face de la sangle SC qui est opposée à la face arrière FR de cette même sangle SC qui est au contact du corps JP du passager, et donc qui est orientée vers l'âme AP du pêne extractible PE.

On comprendra que l'angle obtus α1 est l'angle qui sépare le plan, dans lequel est sensiblement située la face supérieure FS du passant PC, du plan dans lequel est sensiblement située la face avant FA de la sangle SC lorsque cette dernière est tendue comme dans les schémas des figures 3 et 4.

Sur la figure 3, la direction de coulissement de la sangle tendue dans le passant est la perpendiculaire aux grands côtés de l'ouverture visible de l'orifice interne OI.

Sur la figure 4, la direction de coulissement de la sangle tendue dans le passant est matérialisée par la ligne pointillée référencée SC.

Cet angle obtus α1 de la face supérieure FS peut par exemple être choisi dans un intervalle qui s'étend entre environ 110° et environ 150°. A titre d'exemple non limitatif, l'angle obtus α1 peut être choisi égal à environ 135°.

Grâce à cette inclinaison, la partie PP du pêne extractible PE est contrainte à être inclinée sensiblement de l'angle obtus α1 par rapport à la face avant FA de la sangle SC lorsqu'elle est au contact de la face supérieure FS du passant PC.

Le passant PC étant mieux plaqué contre la cuisse JP de la personne qui est assise sur le siège SI que sa ceinture de sécurité SC équipe, il écarte très peu de cette personne le pêne extractible PE, et donc le pêne extractible PE ne repousse pas la boucle BC vers le siège voisin. Le passant PC ne constitue donc plus une gêne ni pour la personne qui est assise sur le siège SI que sa ceinture de sécurité SC équipe, ni pour l'occupant du siège voisin. En outre, il entre plus difficilement en contact avec des passagers ou des équipements du véhicule, ce qui limite les possibilités d'endommagement d'un revêtement (notamment de siège).

On notera, comme cela est illustré sur les figures 3 et 4, que la face inférieure FI du passant PC peut être également inclinée d'un (ou biseautée suivant un) angle α2 choisi par rapport à la face avant FA de la sangle SC. De préférence, cet angle α2 est aigu.

On comprendra que l'angle aigu α2 est l'angle qui sépare le plan, dans lequel est sensiblement située la face inférieure FI du passant PC, du plan dans lequel est sensiblement située la face avant FA de la sangle SC lorsque cette dernière est tendue comme dans les schémas des figures 3 et 4.

Cet angle aigu α2 de la face inférieure FI peut par exemple être choisi dans un intervalle qui s'étend entre environ 20° et environ 60°. A titre d'exemple non limitatif l'angle aigu α2 peut être choisi égal à environ 45°.

Cette inclinaison de la face inférieure FI du passant PC permet de réduire encore plus la gêne qu'il occasionne directement ou qu'il induit indirectement du fait qu'il repousse le pêne extractible PE et donc la boucle BC.

L'invention ne se limite pas aux modes de réalisation de passant et de ceinture de sécurité décrits ci-avant, seulement à titre d'exemple, mais elle englobe toutes les variantes que pourra envisager l'homme de l'art dans le cadre des revendications ci-après.

## Revendications

1. Passant (PC) pour limiter le coulissement d'un pêne extractible (PE) par rapport à une sangle (SC) de ceinture de sécurité (CS), **caractérisé en ce qu'**il comprend un corps muni d'un orifice interne (OI) débouchant sur des faces dites supérieure (FS) et inférieure (FI) opposées et dans lequel peut coulisser ladite sangle (SC), ladite face supérieure (FS) étant inclinée d'un angle obtus choisi par rapport à une face avant (FA) de ladite sangle (SC) orientée vers une extrémité libre (AP) du pêne extractible (PE), de manière à contraindre une portion (PP) dudit pêne extractible (PE), dans laquelle coulisse ladite sangle (SC), à être inclinée sensiblement dudit angle obtus par rapport à ladite face avant (FA) lorsqu'elle est au contact de ladite face supérieure (FS) du passant (PC).

2. Passant (PC) pour limiter le coulissement d'un pêne extractible (PE) par rapport à une sangle (SC) de ceinture de sécurité (CS), **caractérisé en ce qu'**il comprend un corps muni d'un orifice interne (OI) débouchant sur des faces dites supérieure (FS) et inférieure (FI) opposées et dans lequel peut coulisser ladite sangle (SC), ladite face supérieure (FS) étant inclinée d'un angle obtus choisi par rapport à la direction de coulissement de la sangle dans le passant, de manière à contraindre une portion (PP) dudit pêne extractible (PE), dans laquelle coulisse ladite sangle (SC), à être inclinée sensiblement dudit angle obtus par rapport à ladite face avant (FA) lorsqu'elle est au contact de ladite face supérieure (FS) du passant (PC).

3. Passant selon la revendication 2, **caractérisé en ce que** ladite face supérieure (FS) est inclinée d'un angle obtus choisi par rapport à la direction parallèle aux faces internes de l'orifice interne.

4. Passant selon la revendication 2 ou 3, **caractérisé en ce que** ladite face supérieure (FS) est inclinée d'un angle obtus choisi par rapport à la face avant extérieure du passant qui est située du côté du pêne extractible.

5. Passant selon l'une quelconque des revendications précédentes, **caractérisé en ce que** ledit angle obtus de la face supérieure (FS) est choisi dans un intervalle s'étendant entre environ 110°et environ 150°.

6. Passant selon la revendication 5, **caractérisé en ce que** ledit angle obtus de la face supérieure (FS) est choisi égal à environ 135°.

7. Passant selon l'une quelconque des revendications précédentes, **caractérisé en ce que** ladite face inférieure (FI) est inclinée d'un angle aigu choisi par rapport à ladite face avant (FA) de la sangle (SC).

8. Passant selon la revendication 7, **caractérisé en ce que** ledit angle aigu de la face inférieure (FI) est choisi dans un intervalle s'étendant entre environ 20°et environ 60°.

9. Passant selon la revendication 8, **caractérisé en ce que** ledit angle aigu de la face inférieure (FI) est choisi égal à environ 45°.

10. Ceinture de sécurité (CS) comprenant une sangle (SC) coulissant dans une portion (PP) d'un pêne (PC), **caractérisée en ce qu'**elle comprend en outre un passant (PR) selon l'une des revendications précédentes, dans lequel coulisse ladite sangle (SC).

11. Ceinture de sécurité selon la revendication 10, **caractérisée en ce que** ledit pêne (PE) est du type dit « plat ».

12. Ceinture de sécurité selon l'une des revendications 10 et 11, **caractérisée en ce qu'**elle est destinée à équiper un siège de véhicule automobile.

13. Ensemble comprenant une sangle de ceinture de sécurité, un pêne extractible et un passant pour limiter le coulissement du pêne extractible par rapport à la sangle de ceinture de sécurité, le passant étant selon l'une des revendications 1 à 9.
